# EUROPEAN PATENT SPECIFICATION

(11) **EP 1 671 545 B1**
(45) Date of publication and mention of the grant of the patent: **03.10.2007**
(21) Application number: 03750735.7
(22) Date of filing: 24.09.2003
(51) Int. Cl.: A22C 11/12

(54) **MACHINE FOR TYING CHARCUTERIE PRODUCTS OR SAUSAGES WITH CONTINUOUS CORD OR YARN**
MASCHINE ZUM FESTBINDEN VON FLEISCH- ODER WURSTWAREN MIT EINER DURCHGEHENDEN SCHNUR ODER EINEM DURCHGEHENDEN FADEN
MACHINE A FICELER POUR PRODUITS DE CHARCUTERIE OU CHARCUTERIE EN BOYAU UTILISANT UN FIL OU UNE FICELLE CONTINU

(43) Date of publication of application: 21.06.2006
(73) Proprietor: INDUSTRIAS GASER, S.L., 17190 Salt (Girona) (ES)
(72) Inventor: GARGANTA RIUBRUGENT, Narcis, 17190 SALT(Girona) (ES)
(74) Representative: Manresa Medina, José Manuel
(86) International application number: PCT/ES2003/000482
(87) International publication number: WO 2005/027646

(56) References cited:
- EP-A2- 1 053 683
- ES-A1- 319 586
- ES-A1- 381 072
- ES-A3- 371 219
- ES-T3- 2 172 106

## Description

A machine for tying charcuterie products or sausages with continuous cord or yarn, Which incorporates a product tying mechanism consisting of a first toothed wheel or gear, a locking bolt, a threaded lead screw, a spring, a moving disc, a reel of cord or yarn, with a base or support, a cord guide, a fixed billet, some cutting blades that cut-off the product; so that when the toothed wheel of gear rotates from its rest position to an operating position, the cutting blades that cut-off the product, the locking bolt moves from the first stop to the second causing a screw movement of the thread that takes the disc towards the fixed billet immobilising and tensioning the cord or yarn, with the said moving disc returning to its initial position once the toothed wheel or gear stops and the locking bolt is in contact with the first stop, the cord slackens and no longer cuts off the product.

### BACKGROUND TO THE INVENTION

Several patents are known in the state of the art, which make reference to automatic or semi-automatic charcuterie product tying machines, such as ES-A-319 586.

Thus, European Patent No 0224421, of ESTABLISSEMENTS CHARLES FRERES & CIE, of 1986 is known, in which suitable means are located on a box, which permit the simultaneous location of "n" ties on products that are presented in a continuous fashion; cord-feed control mechanisms; some cord tensioning mechanisms, some complementary knot pressure mechanisms; some cord presentation mechanisms; some devices with the means of deform the cord path developed in front of the heads; and some means of ensuring common and separate command of the mechanisms necessary for tie formation and movement of the pressure elements for the products to be tied.

The patent of Mr Luigi and Mr Stefano Pedroia, European Patent No 0865732, of 1998, refers to a machine for automatically tying the meat paste or similar sausage substance inside a sausage skin with a cord. It points out that, according to the known state of the art, automatic machines for tying sausage skins incorporate a reel of cord that rotates around the skin to be tied, making knots at various position along the skin. The need to rotate complete reel at high speed around the skin generates significant kinematic forces due to the acceleration and deceleration of large centrifugal masses. All this requires the use of reduced cord reel diameters. The invention in question eliminates the said difficulty by incorporating a reel on which the tying cord is wound, in a coaxial fashion to the axis of symmetry of the skin that passes through the reel in an axial direction. In this way, all centrifugal forces produced by the rotation of the reel of cord, making it possible to employ reels of cord with much larger diameters and increasing the production performance of the machine, but without any significant problems arising due to high forces (oscillations, vibrations, incontrollable excessive cord tensions).

Spanish Patent No 0517535 (ES8307449) of 1982, belonging to Mr Yves Pujol, is also known, which consists of an automatic machine that permits tying, following a pre-established cycle, by means of a twine or similar cord, solid or hollow objects. It consists of a mechanism that controls cord feed and distribution; a mechanism that ensures the tightness of the cord and its winding towards the interlacing area; a mechanism for ensuring the shaping of the cord for the tie, for successive and complementary deformation in its path; a mechanism the endures the securing of the product that is to be tied; a mechanism that ensures the location of the tie on the product; a mechanism that ensures a double function according to position; a mechanism for presentation of the product to be tied; and a thread-cutting mechanism.

Finally and as more distant background, but of great value for the state of the art, Spanish Patent No 381072, from the company TALLERES CATO, S.A., from 1970, must be mentioned, which consists of a head that rotates around a hollow shaft, the head of which dispenses a tying cord for tying the sausage meat that passes through the hollow shaft, which is also fitted with a moving carriage cut-off device that periodically cuts-off the sausage meat and a periodic pulling device for the same sausage meat, the carriage of which is located in front of the head and to the movement of the sausage meat, so that in its position of maximum forward movement coincides with the tie plane and its pull path is equal to the length of the executed portion of the sausage meat, so that the mentioned carriage involves a central orifice through which the sausage meat passes through.

### A BRIEF DESCRIPTION OF THE INVENTION PATENT

This invention is a significant advance in the sector for machines for tying charcuteries products or sausages, since its saves a great deal of time due to its high operating speed and also provides a large number of safety features that make it highly reliable and very safe for the operators using it and it is also very simple to put into operation and work with because of its great versatility, all of which make it ideal for all types of companies, both large and small.

First, the inventor solves the problem of tensioning and detensioning the cord when tying or advancing the sausage meat of the charcuterie product in question because it is the actual rotation of the gears that actives cord tensioning or detensioning so that the feed (sausage machine) does not have any problems in moving the sausage meat forward.

Thus, when rotation of the toothed wheel or gear is produced, a thread associated with the said toothed wheel or gear permits the lead of a screw that tenses the cord or yarn and does not free it until the programmed turn or turns of the said toothed wheel or gear are completed, detensioning it when the said gears stop, so that, when the machine is stopped, the cord is not tensioned and can be pulled out. The toothed wheels or gears are able to turn the number of times necessary depending on the product needs.

In this way, the product directly enters the tying machine from the corresponding sausage machine and it is the actual sausage machine that pushes the sausage meat outwards, passing through the tying machine; this sausage meat can leave the sausage machine already portioned and the tying machine operation is limited to tying off each of the portions that are of the same size.

For this reason, it is necessary for the cord to be detensioned when the sausage machine pushes the sausage meat forward towards a ramp in direction of a collection tray.

This part of the machine incorporates a cord or yarn detection system that detains machine operation when the referred cord runs out, or if it breaks, or if it jams or any other incident that prevents correct cord or yarn operation.

Another of the advances of this invention consists of employing a double cylinder as the mechanism to move the toothed wheels or gears, which means the cylinder in never in a critical position in such a way that ensures machine start-up at all times. All the previous is completed with the inclusion of some non-return bearings that prevent inverted toothed wheel or gear rotation.

It also includes a device that detects the entrance of the food to be tied so that, when the referred detector receives the lack of food signal, machine operation is stopped.

Moreover, this is combined with a machine movement system (for example, by means of a piston) that facilitates the separation of the machine covered by this invention from the automatic sausage machine loader that feeds the product to the machine. All this means that the referred machine can be synchronised with any type feeder since it is not fixed to any particular feeder and is easily separated so that it can be coupled to another feeder.

One more advantage of this machine consists of an automatic machine stop system in case it has to be handled inside, so that the machine is automatically switched off when it is opened for inspection and it will remain switched off while the operator is working inside, because while the cover is opened, the electric circuit is open and the machine cannot operate.

All these previously described advantages involve a significant advance in the tying machine sector which is combined with the simple installation of this machine, requiring only a main socket, all making it possible to very quickly couple it to already existing sausage machines with low installation costs.

In addition, because of its system, it is a machine that can be controlled by a single operator instead of the two that are normally required, resulting in significant labour cost savings and, in the long run, because of its simplicity, should mean very little repair work for its user.

### BRIEF DESCRIPTION OF THE DRAWINGS

In order to facilitate the description nine pages of drawings are included with this report, in which a practical embodiment example is represented, which is provided merely as an non-limiting example of this invention.
- Figure 1 is a perspective view of the machine covered by this invention.
- Figure 2 is a partial view of the machine with the cover raised in the entry position for the food to be portioned.
- Figure 3 is a partial view of the machine with the cover raised in cut-off position of the cutting blades.
- Figure 4 is a partial view of the cord tensioning and detensioning mechanism.
- Figure 5 is a partial view of the cord tensioning and detensioning mechanism showing reel extraction.
- Figure 6 is a partial view of the cord tensioning and detensioning mechanism from the point of view opposite that of Figure 4.
- Figure 7a is a view of the toothed wheel or gear in the active position or with the cord or yarn detensioned or free.
- Figure 7b is a view of the toothed wheel or gear in the active position or immobilisation or fixation of the cord or yarn.
- Figure 8a is a view from above of the tensioning and detensioning mechanism at the moment when the cord is immobilised.
- Figure 8b is a view from above of the tensioning and detensioning mechanism at the moment when the cord is free.
- Figure 9 is a lateral section view of the machine covered by this invention with the feeder machine (sausage machine).
- Figure 10 is a view of Figure 9 with the machine separated from the feeder machine.
- Figure 11 is a lateral view with a partial section of the machine from the side opposite that of Figure 1.

### SPECIFIC EMBODIMENT OF THE APPLIED-FOR INVENTION

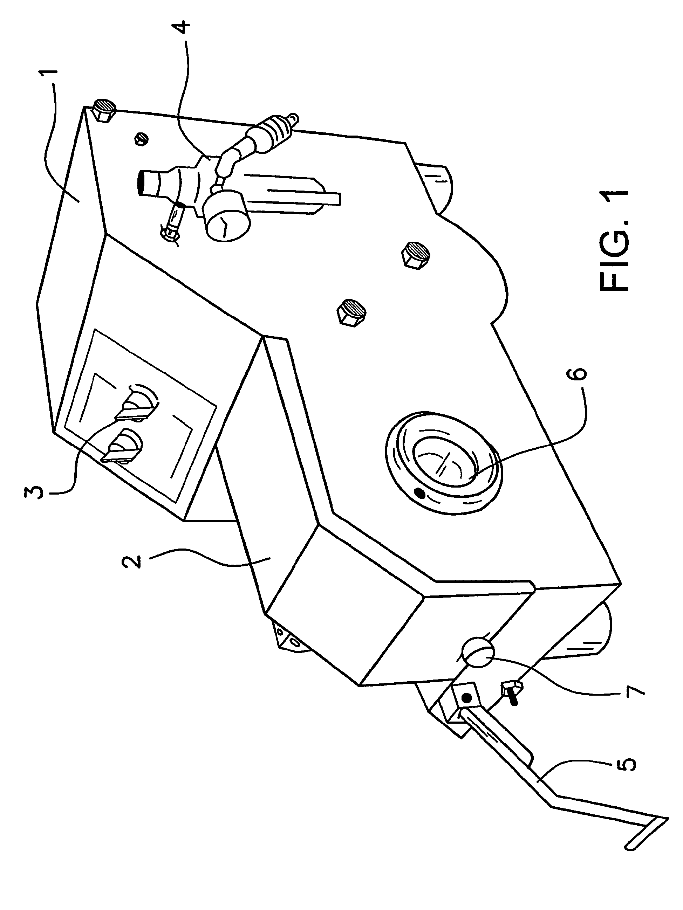

Thus, Figure 1 shows a casing 1 of the machine of the applied-for invention, a cover 2, some means of control 3, 4, a machine lateral movement lever 5, an entrance 6 for the feeder and a handle 7 for opening the cover 2.

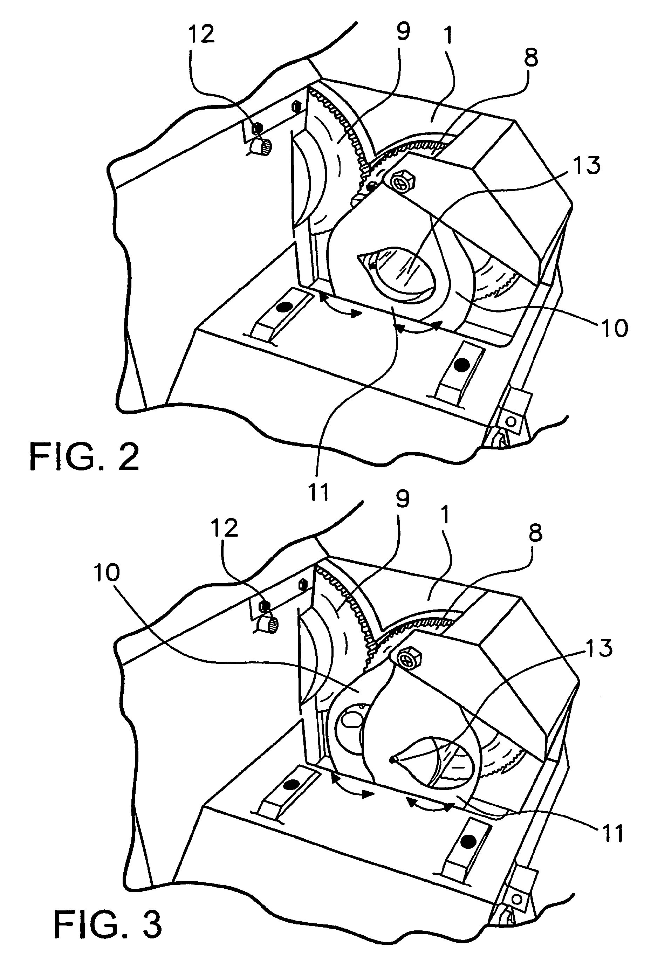

Figures 2 and 3 show the referred casing 1, a first toothed wheel or gear 8, a second toothed wheel or gear 9, a first cut-off blade 10, a second cut-off blade 11, an open-cover detector 12 and a cutting orifice 13.

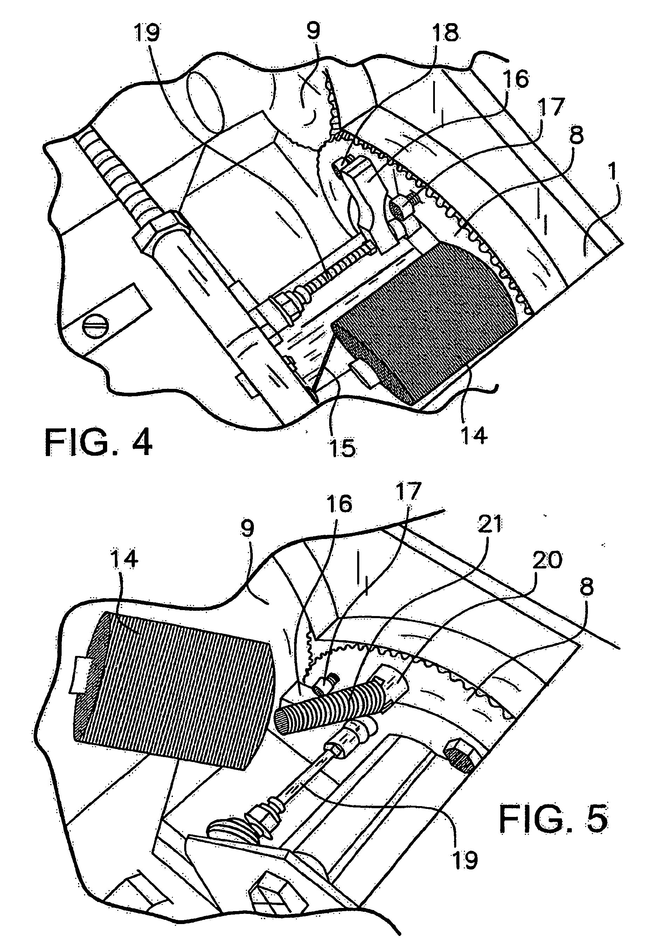

Figure 4 shows the mentioned casing 1, the first toothed wheel or gear 8, the second toothed wheel or gear 9, a reel of cord or yarn 14, cord or yarn 15, a locking bolt 16, between a first stop 17 and second stop 18, both fixed to the mentioned first toothed wheel or gear 8 and a lead screw 19.

The referenced casing 1, first toothed wheel or gear 8, second toothed wheel or gear 9, reel 14, locking bolt 16, first stop 17 and lead screw 19 are shown in Figure 5, together with a reel support 21 and an articulated base 20 for the referred base.

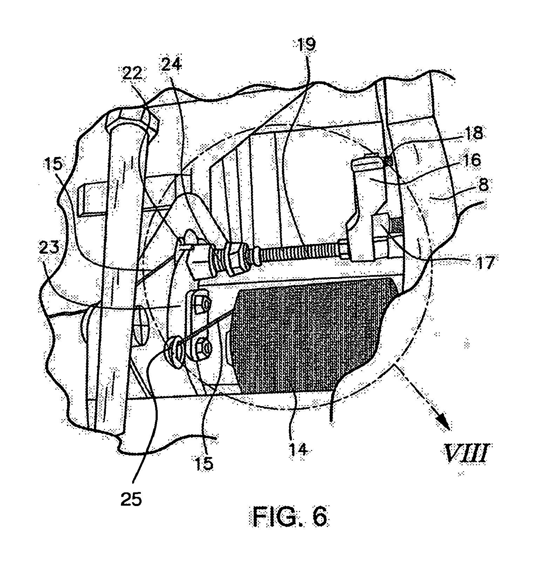

Figure 6 shows the mentioned toothed wheel or gear 8, the reel 14, the cord or yarn 15, the locking bolt 16, the first stop 17, the lower part of the second stop 18, the lead screw 19, a mobile disc 22, a fixed billet 23, a cord-guide 25 and a spring 24 firmly coupled to the referred lead screw 19.

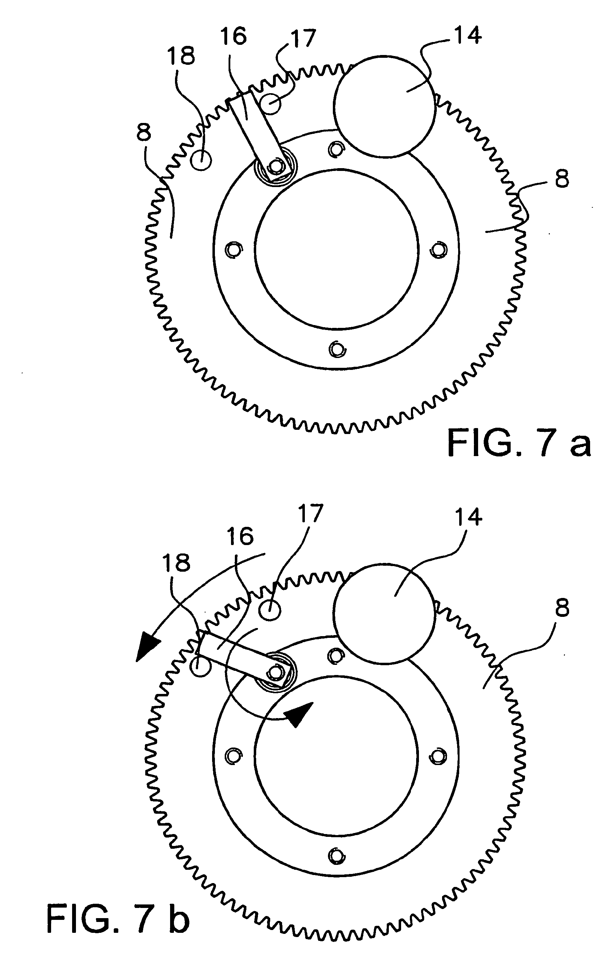

Figures 7a and 7b show the referred reel 14, the first toothed wheel or gear 8, on which is found the first stop 17, the second stop 18 and the locking bolt 16.

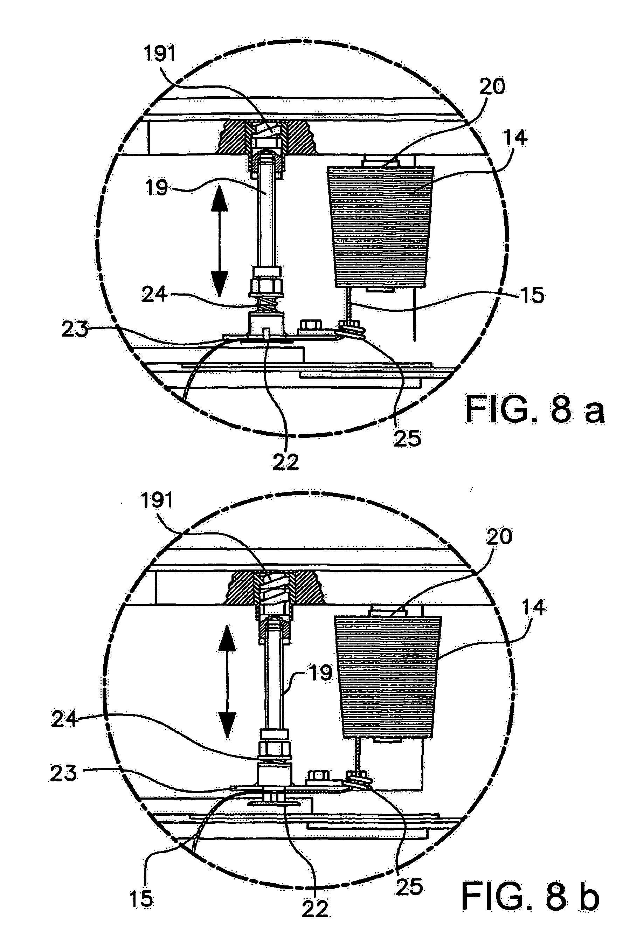

Figures 8a and 8b are a continuation of the previous Figures 7a and 7b and show the reel 14, the cord or yarn 15, the lead screw 19, its thread 191, a cord-guide 25, the spring 24, the moving disc 22 and the fixed billet 23.

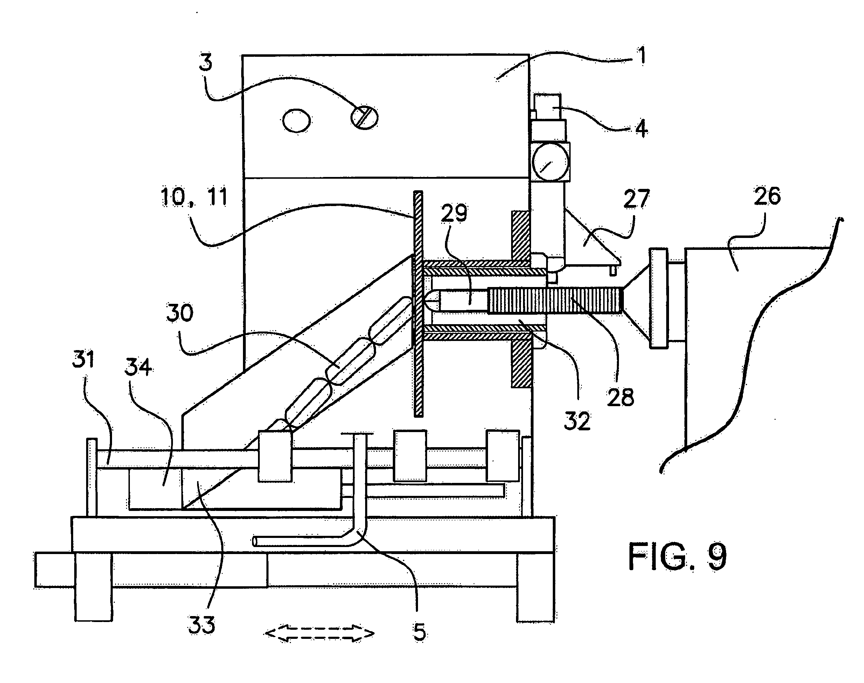

Figure 9 shows the casing 1, the means of control 3, 4, the cutting blades 10, 11, the lever, 5, some guides 31 for lateral machine movement, a feeder 26, the feeder entrance 6, a product detector 27, a feeder channel 32, a feeder element or pipe 28, the product 29, the prepared product 30, a ramp 33 and a tray 34.

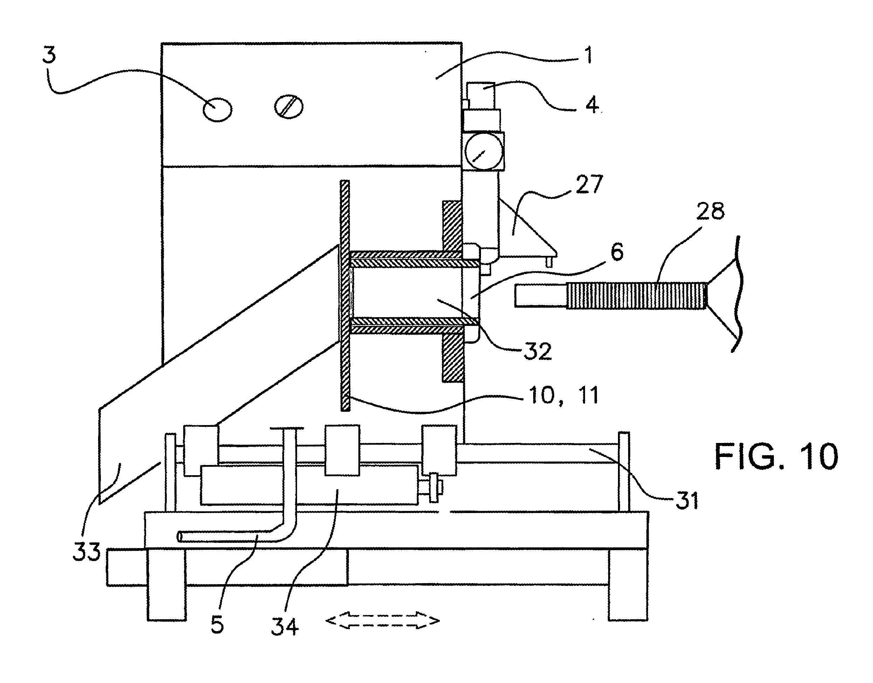

Figure 10 shows the casing 1, the means of control 3, 4, the cutting blades 10, 11, the lever 5, the displacement guides 31, the feeder entrance 6, the product detector 27, the feeder channel 32, the feeder pipe 28, the ramp 33 and tray 34.

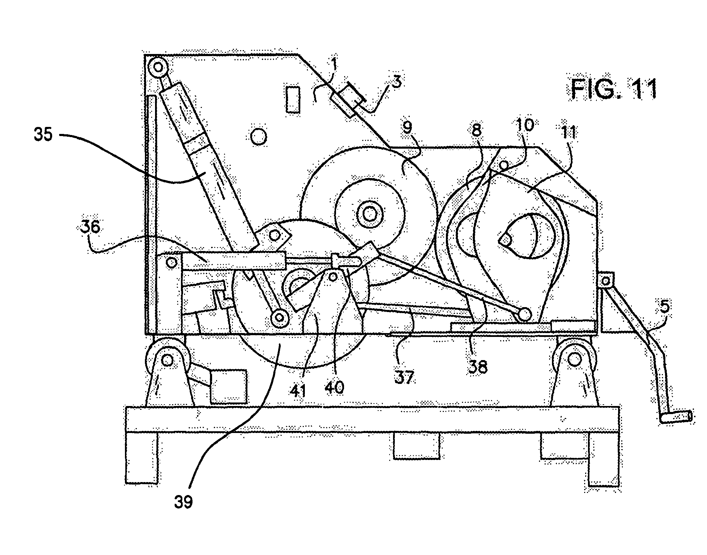

Finally, Figure 11 shows the casing 1, the means of control 3, the lever 5, the first toothed wheel or gear 8, the second toothed wheel or gear 9, a third toothed wheel or gear 39, a double cylinder 35, a cylinder 36, a first connecting rod 37, a second connecting rod 38, a brace 40, a support 41 for the said brace 40, the first cutting blade 10 and the second cutting blade 11 (this illustration does not show the toothed wheels or gears).

Thus, in a specific embodiment example, the feeder 26 or feeder machine is prepared, then the tying machine of this invention is moved by means of the guides 31 and with the assistance of the lever 5, from the position of Figure 10 to that of Figure 9, so that the feeder pipe 28 crosses the entrance 6 and remains inside the feeder channel 32, inside the tying machine.

In a second phase, product 29 is supplied until a predetermined part of the said product 29 extends beyond the referred feeder pipe 28 and the tying machine ties it with several turns of cord.

Thus, in the moment prior to the first toothed wheel or gear 8 turning, the locking bolt 16 is in the rest position or, which is the same, in contact with the first stop 17 (Figure 7a). Moreover, the spring 24 of the lead screw 19 is not compressed and the moving disc 22 and the fixed billet 23 are separated from each other, maintaining the cord or yarn 25 free (Figure 8b).

One part of the cord passes through the cutting orifice 13, causing it to fall via the ramp 33. In its initial position, the cutting orifice 13 may be completely open, just as shown in Figure 2.

Thus, a testimonial part of the product passes through the said cutting orifice 13, waiting for the machine in question to operate.

Once the tying machine is prepared, it is put into operation by the means of control 3, 4, selecting the programmes and measurements of the product to be tied.

Thus, when the tying machine is put into operation, the double cylinder 35, rotates the third toothed wheel or gear 39, this then rotates the second toothed wheel or gear 9 and this will rotate the first toothed wheel or gear 8. It must be pointed out here that the machine could operate with a single toothed wheel or gear, with the double cylinder 35 transmitting the movement directly to the first toothed wheel or gear 8.

The cylinder 36 transmits a movement to the brace 40 and this to the first connecting rod 37 and the second connecting rod 38, which operates the first cutting blade 10 and the second cutting blade 11 respectively.

At the same time, the cylinder 36 synchronises with the first toothed wheel of gear 8, so that, either previously or at the same time that the mentioned first toothed wheel or gear rotates, the cutting blades 10, 11 cut the product 29 and will be in the position shown in Figure 3.

The brace 40 is integral to the free ends of the first connecting rod 37 and the second connecting rod 38, together with one of the ends of cylinder 36; and also mounted on the support 41, for which reason the said brace 40 is tilting.

It is possible to think of an embodiment example in which the referred cylinder 36 is also a double cylinder.

When the first toothed wheel or gear 8 commences rotation, the locking bolt 16 tilts from the first stop 17 to the second stop 18 (Figure 7b). The said locking bolt articulates with the lead screw 19, so that when the said locking bolt 16 rotates, it causes the lead screw 19 to screw in and move in the opposite direction to the cutting blades 10, 11.

Thus, at the referred moment of the movement screw 19 screwing in or moving in direction of the first toothed wheel or gear 8, the moving disc 23 move closer to the fixed billet 22, leaving the cord or yarn 15 fixed or immobile.

The machine includes a device for detecting contact with the moving disc 22 with the fixed billet 23, activating the stop pf the tying machine operation. If the moving disc 22 comes into contact with the fixed billet 23, it means that the cord or yarn 15 has run out, either because the reel 14 is empty or because the cord or yarn has broken etc.

When the first toothed wheel or gear 8 rotates, the entire tensioning and detensioning mechanism also rotates, in other words, the lead screw 19, the fixed billet 23, the moving disc 22, the reel 14, the reel base 20, the reel support 21, the cord-guide 25 and the cord or yarn 15, which is tensioned and moves around the product 29 in the area previously cut off by the cutting blades 10, 11.

Once the previously determined number of turns or rotations of the cord or yarn 15 around the product have been completed, the locking bolt 16 returns to its initial or rest position, shown in Figures 7a and 8b, detensioning the cord or yarn 15.

The cylinder 36 moves in a direction opposite that previously taken so that it once again operates the connecting rods 37, 38 and the brace 40, moving the cutting blades 10, 11 so that these no longer cut off the product 29, opening the cutting orifice 13.

By means of a feeder pipe 28, the feeder 26 supplies a new quantity of product 29 to the feeder channel 32, pushing the previous product towards the ramp 33. In addition, the continuous cord or yarn 15, which is in the rest position and free or detensioned, is pulled by the prepared product 30 while it descends via the referred ramp 33.

The previously described procedure will be subsequently initiated in order to proceed with the tying of the rear part of the said prepared product 30, which coincides with the front part of product 29. The referred prepared products 30 will commence sliding along the ramp 33 to be collected by the tray 34, prepared for this purpose.

Once the product tying operation has been completed, machine operation is stopped and lever 5 is gripped to move the machine along the displacement guides 31 in the opposite direction to the feeder machine 26, leaving the feeder pipe 27 outside the feeder channel 32.

If the cover 2 is opened while the machine is in operation, a connector (not shown on the drawings) will separate from the open cover detector 12 and the machine will immediately stop since the tying machine electrical circuit is no longer closed.

In a similar fashion, if the product detector 27 receives the signal indicating a lack of product 29 in the feeder pipe 28, the tying machine will equally will stop.

This invention patent describes a new machine for tying charcuterie products or sausages with continuous cord or yarn. The examples described here do not limit this invention, for which reason, it could have various applications and/or adaptations, all of which are within the scope of the following claims.

## Claims

1. Machine for tying charcuterie products or sausages with continuous cord or yarn of the type that consists of a casing (1), some means of control (3, 4), and entrance (6) for a feeder element or pipe (28) from a feeder machine (26) (sausage machine), feeding channel (32), and tying mechanism for products (29) which incorporates a reel (14) of cord or yarn (15), with a base (20) and a support or shaft (21), a cord-guide (25), a fixed billet (23) and some cutting blades (10, 11) moved by some means of drive, **characterised in that**
• said tying mechanism comprises:
at least a first toothed wheel or gear (8),
a locking bolt (16) coupled by articulation to a lead screw (19) by its lower part, being its free upper part articulated and delimited in its tilting track by two stops, a first stop (17) and a second stop (18), both fixed on an inner zone of the said first toothed wheel or gear (8),
the referred lead screw (19), which consists of a thread (191), a spring (24), a moving disc (22), with respect to the position of the tying machine,
• and said tying mechanism is arranged so, that when the referred toothed wheel or gear (8) rotates from its resting position, to an active position the cutting blades (10, 11) cut off the product (29), the referred locking bolt (16) moves from the firsts top (17) to the second stop (18), causing a screw-in movement in the thread (191) which, in turn pulls the moving disc (22) towards the fixed billet (23) immobilising and tensioning the corresponding section of cord or yarn (15), with the said moving disc (22) returning to its original position once the first toothed wheel or gear (8) has completed one or more complete turns, as selected, and the locking bolt (16) is in contact with the first stop (17), consequently freeing the cord or yarn (15), with the referred cutting blades (10, 11) ceasing to cut off the product (29).

2. A tying machine according to claim 1 **characterised in that** the means of driving of the referred first toothed wheel or gear (8) that is at least one, consist of a double cylinder (35).

3. A tying machine according to claim 2 **characterised in that** it also incorporates non-return bearings.

4. A tying machine according to claim 1 or 3 **characterised in that** it incorporates a second toothed wheel or gear (8) and a third toothed wheel or gear (39).

5. A tying machine according to claim 1 or 4 **characterised in that** the reel base (20) is integral to the first toothed wheel or gear (8).

6. A tying machine according to claim 5 **characterised in that** the reel support (21) is articulated.

7. A tying machine according to claim 1 **characterised in that** it incorporates a machine lateral displacement mechanism consisting of a lever (5) and some displacement guides (31).

8. A tying machine according to claim 1 **characterised in that** it incorporates an automatic device that will immediately stop the machine when the cover (2) is opened in a working situation which consist of a connector that will open the circuit when separated from the open cover detector (12).

9. A tying machine according to claim 1 **characterised in that** it incorporates a contact detection device of the moving disc (22) with the fixed billet (23), activating the stop motion of the tying machine operation.

10. A tying machine according to claim 1 **characterised in that** it incorporates a detection device for product (29) in the feeder (27), activates the stop motion of the machine operation if this detector senses a lack of the referred product.

11. A tying machine according to claim 1 or 4 **characterised in that** the drive mechanism for the indicated cutting blades (10, 11) consist of a double connecting rod mechanism (37, 38), integral to a brace (40), articulated by its mid-point and driven by a cylinder (36).

12. A tying machine according to claim 11 **characterised in that** the referred connecting rods consist of a first connecting rod (37), integral to the first cutting blade (10), a second connecting rod (38) integral to the second cutting blade (11) and a brace (40) integral to the free ends of the first connecting rod (37) and the second connecting rod (38), together with one of the ends of the cylinder (36).

13. A tying machine according to claim 12 **characterised in that** the said brace (40) is mounted on a support (41), with the said brace (40) being able to tilt.

14. A tying machine according to claim 12 or 13 **characterised in that** the referred cylinder (36) is a double cylinder.

## Patentansprüche

1. Maschine zum Abbinden von Wurstwaren bzw. Würsten mit einer Endlosschnur bzw. Endlosgarn, bestehend aus einem Gehäuse (1), Steuermitteln (3,4) und einem Eingang (6) für ein Zuführelement bzw. eine Rohrleitung (28) von einer Zuführmaschine (26) (Wurstmaschine), einem Zuführkanal (32) sowie einem Abbindemechanismus für Produkte (29) mit einer Schnurrolle (14) bzw. Garnrolle (15), einem Sockel (20) sowie einem Träger oder Schaft (21), einer Schnurführung (25), einem festen Block (23) und mehreren Schneiden (10, 11), die von Antriebsmitteln bewegt werden, **dadurch gekennzeichnet, dass**
• der Abbindemechanismus folgendes umfasst:
mindestens ein Zahnrad oder Getriebe (8),
einen Sperrbolzen (16), der am unteren Teil mit einer Gewindespindel (19) gelenk verbunden ist, wobei dessen freier oberer Teil ein Gelenk aufweist und deren Schwenkbahn durch zwei Anschläge begrenzt ist, und zwar einem ersten Anschlag (17) und einem zweiten Anschlag (18), die beide an einem Innenbereich des ersten Zahnrads bzw. Getriebes (8) befestigt sind,
die Gewindespindel (19), die aus einem Gewinde (191), einer Feder (24), einer bezüglich der Stellung der Abbindemaschine beweglichen Scheibe (22) besteht,
• und der Abbindemechanismus so angeordnet ist, dass bei Drehung des Zahnrads bzw. Getriebes (8) aus der Ruhestellung in eine Arbeitsstellung das Produkt (29) von den Schneiden (10, 11) abgeschnitten wird, der Sperrbolzen (16) vom ersten Anschlag (17) zum zweiten Anschlag (18) verfährt, wodurch im Gewinde (191) eine Einschraubbewegung erfolgt, durch die die bewegliche Scheibe (22) ihrerseits in Richtung des festen Blocks (23) bewegt wird, wodurch der entsprechende Abschnitt der Schnur bzw. des Garns (15) blockiert und gespannt wird, wobei die bewegliche Scheibe (22) nach Beendigung einer oder mehrerer vollständiger Drehungen des ersten Zahnrads bzw. Getriebes (8) je nach Bedarf in ihre Ausgangsstellung zurückkehrt und der Sperrbolzen (16) mit dem ersten Anschlag (17) in Kontakt steht, wodurch die Schnur bzw. das Garn (15) freigegeben wird und die genannten Schneiden (10, 11) kein Produkt (29) mehr abschneiden.

2. Abbindemaschine nach Anspruch 1, **dadurch gekennzeichnet, dass** das zumindest eine Antriebsmittel für das erste Zahnrad bzw. Getriebe (8) aus einem Doppelzylinder (35) besteht.

3. Abbindemaschine nach Anspruch 2, **dadurch gekennzeichnet, dass** sie ebenfalls nicht zurückkehrende Lager aufweist.

4. Abbindemaschine nach Anspruch 1 oder 3, **dadurch gekennzeichnet, dass** sie ein zweites Zahnrad bzw. Getriebe (8) und ein drittes Zahnrad bzw. Getriebe (39) aufweist.

5. Abbindemaschine nach Anspruch 1 oder 4, **dadurch gekennzeichnet, dass** der Rollensockel (20) mit dem ersten Zahnrad bzw. Getriebe (8) integral verbunden ist.

6. Abbindemaschine nach Anspruch 5, **dadurch gekennzeichnet, dass** der Rollenträger (21) ein Gelenk aufweist.

7. Abbindemaschine nach Anspruch 1, **dadurch gekennzeichnet, dass** sie einen Mechanismus zur seitlichen Verschiebung der Maschine aufweist, der aus einem Hebel (5) und Verschiebungsführungen (31) besteht.

8. Abbindemaschine nach Anspruch 1, **dadurch gekennzeichnet, dass** sie eine automatische Vorrichtung aufweist, über die die Maschine beim Öffnen der Abdeckung (2) im Betriebszustand sofort angehalten wird und die aus einem Steckverabbinder besteht, der bei Trennung vom Sensor (12) zum Öffnen der Abdeckung den Schaltkreis öffnet.

9. Abbindemaschine nach Anspruch 1, **dadurch gekennzeichnet, dass** sie eine Vorrichtung zur Erkennung eines Kontakts der beweglichen Scheibe (22) mit dem festen Block (23) aufweist, wodurch der Anhaltevorgang des Betriebs der Abbindemaschine in Gang gesetzt wird.

10. Abbindemaschine nach Anspruch 1, **dadurch gekennzeichnet, dass** sie eine Produkterfassungsvorrichtung in der Zuführvorrichtung (27) aufweist, durch die bei Erkennung von Produktmangel durch den Sensor der Anhaltevorgang des Maschinenbetriebs in Gang gesetzt wird.

11. Abbindemaschine nach Anspruch 1 oder 4, **dadurch gekennzeichnet, dass** der Antriebsmechanismus für die Schneiden (10, 11) aus einem doppelten Pleuelstangenmechanismus (37, 38) besteht, der integral mit einer Strebe (40) verbunden ist, die an ihrem Mittelpunkt ein Gelenk aufweist und von einem Zylinder (36) angetrieben wird.

12. Abbindemaschine nach Anspruch 11, **dadurch gekennzeichnet, dass** die Pleuelstangen aus einer ersten Pleuelstange (37), die integral mit der ersten Schneide (10) verbunden ist, einer zweiten Pleuelstange (38), die integral mit der zweiten Schneide (11) verbunden ist, und einer Strebe (40) besteht, die integral mit den freien Enden der ersten Pleuelstange (37) und der zweiten Pleuelstange (38) zusammen mit einem Ende des Zylinders (36) verbunden ist.

13. Abbindemaschine nach Anspruch 12, **dadurch gekennzeichnet, dass** die Strebe (40) an einer Halterung (41) montiert ist, wobei die Strebe (40) schwenkbar ist.

14. Abbindemaschine nach Anspruch 12 oder 13, **dadurch gekennzeichnet, dass** es sich bei dem Zylinder (36) um einen Doppelzylinder handelt.

## Revendications

1. Machine à ficeler des produits de charcuterie ou saucisses avec une ficelle ou fil continu, du type consistant en un boîtier (1), des moyens de contrôle (3, 4), et une entrée (6) pour un élément ou tuyau d'alimentation (28) à partir d'une machine d'alimentation (26) (machine à fabriquer les saucisses), canal d'alimentation (32), et un mécanisme à ficeler des produits (29) qui incorpore une bobine (14) de ficelle ou fil (15), avec une base (20) et un support ou axe (21), un guide-ficelle (25), une plaquette fixe (23) et des lames de coupe (10, 11) actionnées par des moyens de commande, **caractérisée en ce que**
• ledit mécanisme à ficeler comprend:
au moins une première roue dentée ou engrenage (8),
une tête de verrouillage (16) couplée par une articulation avec une tige filetée (19) par la partie inférieure, la partie supérieure libre étant articulée et délimitée dans sa course de basculement par deux butoirs, un premier butoir (17) et un deuxième butoir (18), les deux étant fixés à une zone interne de ladite première roue dentée ou engrenage (8),
ladite tige filetée (19), qui consiste en un pas de vis (191), un ressort (24), un disque mobile (22), par rapport à la position de la machine à ficeler,
• et ledit mécanisme à ficeler est disposé de telle façon que lorsque ladite roue dentée ou engrenage mentionné (8) tourne en partant de la position de repos vers une position active, les lames de coupe (10, 11) coupent le produit (29), ladite tête de verrouillage (16) allant du premier butoir (17) au deuxième butoir (18) en entraînant un mouvement de vissage sur le pas de vis (191) qui, à son tour, tire le disque mobile (22) vers la plaquette fixe (23) en immobilisant et en tendant la section correspondante de ficelle ou fil (15), ledit disque mobile (22) revenant à sa position initiale après que la première roue dentée ou engrenage (8) ait effectué un tour complet ou plus d'un tour, selon sélection, et la tête de verrouillage (16) soit entrée en contact avec le premier butoir (17), libérant ainsi la ficelle ou fil (15), lesdites lames de coupe (10, 11) cessant de couper le produit (29).

2. Machine à ficeler conformément à la revendication 1, **caractérisée en ce que** les moyens de commande de ladite première roue dentée ou engrenage (8), c'est-à-dire au moins un, consiste en un cylindre double (35).

3. Machine à ficeler conformément à la revendication 2, **caractérisée en ce qu'**elle incorpore également des coussinets de non retour.

4. Machine à ficeler conformément à la revendication 1 ou 3, **caractérisée en ce qu'**elle incorpore une deuxième roue dentée ou engrenage (8) et une troisième roue dentée ou engrenage (39).

5. Machine à ficeler conformément à la revendication 1 ou 4, **caractérisée en ce que** la base de la bobine (20) est solidaire avec la première roue dentée ou engrenage (8).

6. Machine à ficeler conformément à la revendication 5, **caractérisée en ce que** le support de la bobine (21) est articulé.

7. Machine à ficeler conformément à la revendication 1, **caractérisée en ce qu'**elle incorpore un mécanisme de déplacement latéral dans la machine consistant en un levier (5) et des guides de déplacement (31).

8. Machine à ficeler conformément à la revendication 1, **caractérisée en ce qu'**elle incorpore un dispositif automatique qui arrêtera immédiatement la machine lorsque le couvercle (2) est ouvert pendant une séquence de travail et qui consiste en un connecteur qui, lorsqu'il se sépare du détecteur de couvercle ouvert (12), ouvre le circuit.

9. Machine à ficeler conformément à la revendication 1, **caractérisée en ce qu'**elle incorpore un dispositif de détection de contact du disque mobile (22) avec la plaquette fixe (23), actionnant le mouvement d'arrêt du fonctionnement de la machine à ficeler.

10. Machine à ficeler conformément à la revendication 1, **caractérisée en ce qu'**elle incorpore un dispositif de détection du produit (29) dans l'élément d'alimentation (27), et actionne le mouvement d'arrêt du fonctionnement de la machine si ce détecteur détecte le manque dudit produit.

11. Machine à ficeler conformément à la revendication 1 ou 4, **caractérisée en ce que** le mécanisme de commande pour lesdites lames de coupe (10, 11) consiste en un mécanisme à double baguette de connexion (37, 38), solidaire avec une bielle articulée en son milieu et commandée par un cylindre (36).

12. Machine à ficeler conformément à la revendication 11, **caractérisée en ce que** lesdites baguettes de connexion consistent en une première baguette de connexion (37), solidaire avec la première lame de coupe (10), une deuxième baguette de connexion (38) solidaire avec la deuxième lame de coupe (11) et une bielle (40) solidaire avec les extrémités libres de la première baguette de connexion (37) et la deuxième baguette de connexion (39), et les deux avec l'une des extrémités du cylindre (36).

13. Machine à ficeler conformément à la revendication 12, **caractérisée en ce que** ladite bielle (40) est montée sur un support (41), ladite bielle (40) pouvant basculer.

14. Machine à ficeler conformément à la revendication 12 ou 13, **caractérisée en ce que** ledit cylindre (36) est un cylindre double.
